# EUROPÄISCHE PATENTSCHRIFT

(11) **EP 0 802 537 B1**
(45) Veröffentlichungstag und Bekanntmachung des Hinweises auf die Patenterteilung: **05.03.2008**
(21) Anmeldenummer: 97200989.8
(22) Anmeldetag: 04.04.1997
(51) Int. Cl.: G11B 27/02, G11B 27/30

(54) **Editieranordnung**
Editing arrangement
Dispositif d'édition

(30) Priorität: 10.04.1996 DE 19614158
(43) Veröffentlichungstag der Anmeldung: 22.10.1997
(73) Patentinhaber: BTS Holding International B.V., 4827 HG Breda (NL)
(72) Erfinder: Schmidt, Adam, Röntgenstrasse 24, 22335 Hamburg (DE); Hasenzahl, Markus, Röntgenstrasse 24, 22335 Hamburg (DE)
(74) Vertreter: Ruellan-Lemonnier, Brigitte

(56) Entgegenhaltungen:
- EP-A- 0 438 299
- GB-A- 2 235 815
- US-A- 4 858 033
- PATENT ABSTRACTS OF JAPAN vol. 095, no. 004, 31.Mai 1995 & JP 07 023341 A (FUOSUTEKUSU KK), 24.Januar 1995,
- PATENT ABSTRACTS OF JAPAN vol. 018, no. 172 (P-1715), 23.März 1994 & JP 05 334853 A (TOSHIBA CORP), 17.Dezember 1993,
- PATENT ABSTRACTS OF JAPAN vol. 011, no. 209 (E-521), 7.Juli 1987 & JP 62 029379 A (MATSUSHITA ELECTRIC IND CO LTD), 7.Februar 1987,

## Beschreibung

Die Erfindung betrifft eine Editieranordnung zum non-linearen Editieren von auf einem Datenspeichermedium abgespeicherten Video- und diesen zugeordneten Audio-Daten, wobei die Video-Daten mittels zugeordneten Timecode-Daten markiert sind, und wobei die Editieranordnung beim Editieren eine Schnittliste erstellt, welche für jeden Editierabschnitt wenigstens die zugeordneten Anfangs- und End-Timecode-Daten der Video-Daten des Editierabschnittes enthält sowie eine Wiedergabeanordnung zum Wiedergeben der Video- und Audio-Daten nach einer von der Editieranordnung erstellten Schnittliste.

Beim Editieren von auf einem Speichermedium abgespeicherten Video- und Audio-Daten werden diese neu geordnet und abschnittweise in Editierabschnitte übernommen. Dabei sind die Video-Daten mittels eines Timecodes gekennzeichnet. Die Timecode-Daten kennzeichnen bildgenau die Video-Daten. Damit kann für den Editiervorgang auf jedes Bild der Video-Daten genau zugegriffen werden, ohne daß die Gefahr einer Verwechslung mit anderen Daten besteht. Beim Erstellen der Schnittliste werden für jeden Editierabschnitt im allgemeinen der Timecodewert des ersten und der Timecodewert des letzten Bildes, also die Timecode-Daten des Beginns und des Endes eines Editierabschnittes in der Schnittliste vermerkt. Im Ergebnis gibt die Schnittliste für jeden Editierabschnitt einen Anfangs- und einen Endwert einer zu übernehmenden Videosequenz an. Damit besteht die Möglichkeit, die auf dem Datenspeichermedium abgespeicherten Daten in beliebiger Reihenfolge und auch nur ausschnittsweise in die Schnittliste zu übernehmen. Die Video-Daten können auf diese Weise beliebig umgeordnet werden.

Bei einem wiedergabeseitigen Abarbeiten der Schnittliste werden die in den jeweiligen Editierabschnitten an ihren Timecode-Daten vermerkten Videoabschnitte wiedergegeben. Gegebenenfalls werden ebenfalls die den Video-Daten zugeordneten Audio-Daten wiedergegeben.

Beim sogenannten non-linearen Editieren zeichnet sich das Datenspeichermedium dadurch aus, daß es wahlfreien Zugriff bietet und somit ein wesentlich schnellerer Zugriff auf einzelne Video-Daten und die zugeordneten Audio-Daten möglich ist. Neben den dadurch möglichen schnelleren Zugriff beim Editieren ergibt sich vor allem der Vorteil, daß beim Wiedergeben der Daten der gewünschten Reihenfolge anhand der Schnittliste keine Zwischenspeicherung beispielsweise auf ein Magnetband erfolgen muß, sondern daß eine Wiedergabe entsprechend den Daten der Schnittliste ohne Verzögerung an den Übergängen der Editierabschnitte direkt erfolgen kann, d.h. die Daten können unmittelbar aus dem Datenspeichermedium in der gewünschten Reihenfolge wiedergegeben werden.

US4858033 beschreibt eine Editieranordnung zum Editieren von auf einer Datenspeicheranordnung abgespeicherten Video- und Audio-Daten, wobei die Video-Daten mittels zugeordneter real-time Timecode-Daten markiert sind. Der Benutzer gibt manuell in einen Speicher Timecode-Daten ein und diejenigen Abschnitte der abgespeicherten Video- und Audio-Daten, deren real-time Timecode-Daten mit den manuell eingegebenen Timecode-Daten übereinstimmen werden auf ein Band kopiert.

Bei bekannten Anordnungen zum Editieren und/oder Wiedergeben der Schnittlisten definieren die für die Video-Daten bzw. die diesen zugeordneten Timecode-Daten definierten Schnittpunkte gleichzeitig auch diejenigen der Audio-Daten. Eine zeitliche Anpassung der Audio-Daten ist nicht möglich. Dies ist beispielsweise störend, wenn die die Video-Daten begleitenden Audio-Daten wiedergabeseitig nicht lippensynchron zu den Video-Daten vorliegen sollten.

Es ist Aufgabe der Erfindung, eine Editieranordnung, welche eine Einstellung eines zeitlichen Versatzes zwischen den Audio- und den Video-Daten gestattet, sowie eine Wiedergabeanordnung zu schaffen, welche eine Wiedergabe der Daten mit dem einstelbaren Versatz gestattet.

Diese Aufgabe ist für eine Editieranordnung dadurch gelöst, daß die Editieranordnung das Editieren der Video-Daten anhand der zugeordneten Timecode-Daten vornimmt, daß beim Editieren der Video-Daten an der Editieranordnung ein Zeitversatz der den editierten Video-Daten zugeordneten Audio-Daten relativ zu den

Video-Daten einstellbar ist, daß in der Editieranordnung Mittel vorgesehen sind, welche in Abhängigkeit des eingestellten Zeitversatzes diejenige Zahl von Abtastwerten der Audio-Daten berechnen, um die diese relativ zu den Video-Daten verschoben wiederzugeben sind, so daß der gewünschte Zeitversatz wiedergabeseitig eintritt, und daß die Editieranordnung diese Zahl in der Schnittliste vermerkt.

Bei der Editieranordnung erfolgt das Editieren der Video-Daten in bekannter Weise anhand der Timecode-Daten. Es kann jedoch an der Editieranordnung zusätzlich ein gewünschter Zeitversatz zwischen den an sich den Video-Daten fest zugeordneten Audio-Daten und diesen Video-Daten eingestellt werden. Anhand des eingestellten Zeitversatzes bestimmt die Editieranordnung diejenige Zahl von Abtastwerten der Audio-Daten, um die diese relativ zu den Video-Daten zeitlich versetzt wiederzugeben sind, damit der gewünschte Zeitversatz eintritt. Die Zahl der Audio-Daten ist einerseits abhängig von dem eingestellten Verzögerungswert, andererseits davon, wie viele Abtastwerte der Audio-Daten pro Sekunde vorliegen.

Diese Zahl für den Versatz der Audio-Daten wird in der Schnittliste vermerkt. Dabei kann die Richtung, um die diese Daten relativ zu den an sich zugeordneten Video-Daten zu verschieben sind, anhand des Vorzeichens der Zahl angegeben werden.

Wiedergabeseitig wird entsprechend dieser in der Schnittliste vermerkten Zahl ein Auslesen der Audio-Daten um die entsprechend angegebene Zahl von Abtastwerten verschoben vorgenommen. Damit wird der eingestellte Versatz in gewünschter Weise realisiert.

Es besteht damit die Möglichkeit, eine ursprünglich gegebenenfalls vorhandene Asynchronität zwischen Video- und Audio-Daten zu beseitigen.

Gemäß einer Ausgestaltung der Erfindung ist für die Editieranordnung vorgesehen, daß der Zeitversatz für jeden Editierabschnitt individuell einstellbar ist und daß die Editieranordnung für jeden Editierabschnitt diejenige Zahl von Abtastwerten der Audio-Daten individuell berechnet, um die diese relativ zu den Video-Daten verschoben wiederzugeben sind, so daß der gewünschte Zeitversatz in dem jeweiligen Editierabschnitt wiedergabeseitig eintritt, und daß die Editieranordnung diese Zahl individuell für jeden Editierabschnitt in der Schnittliste vermerkt.

Der einstellbare Zeitversatz kann vorteilhaft für jeden Editierabschnitt individuell einstellbar sein. Es wird dann in der Schnittliste für jeden Editierabschnitt dieser Zeitversatz bzw. die Zahl der Abtastwerte der Audio-Daten, um die diese versetzt wiederzugeben sind, vermerkt. Damit ist sogar für jeden Editierabschnitt eine zeitliche Verschiebung der Audio-Daten möglich. Dies ist insbesondere dann zweckmäßig, wenn die zu editierenden Video- und Audio-Daten aus verschiedenen Aufnahmesequenzen zusammengesetzt sind, bei denen gegebenenfalls ein differierender Zeitversatz vorliegt und zu korrigieren ist.

Die oben angegebene Aufgabe ist für eine Wiedergabeanordnung zum Wiedergeben der Video- und Audio-Daten nach einer von der Editieranordnung erstellten Schnittliste erfindungsgemäß dadurch gelöst, daß die Wiedergabeanordnung das Auslesen der Video-Daten von dem Datenspeichermedium für jeden Editierabschnitt anhand der in der Schnittliste angegebenen Timecode-Werte vornimmt und daß die Wiedergabeanordnung das Auslesen der Audio-Daten von dem Datenspeichermedium in der Weise vornimmt, daß die den ausgelesenen Video-Daten zugeordneten Audio-Daten um diejenige Zahl von Abtastwerten versetzt erfolgt, die in der Schnittliste angegeben ist.

Beim Abarbeiten der Schnittliste orientiert sich die Wiedergabeanordnung anhand der Timecode-Werte, die den Video-Daten zugeordnet sind. Die Video-Daten werden also anhand der Timecode-Werte ausgelesen und wiedergegeben. Die den Video-Daten an sich zugeordneten Audio-Daten werden für jeden Editierabschnitt entsprechend der in dem Editierabschnitt in der Schnittliste vermerkten Zahl von Abtastwerten versetzt wiedergegeben.

Somit ergibt sich die Möglichkeit, wiedergabeseitig für jeden Editierabschnitt eine beliebige Verschiebung der Audio-Daten relativ zu den Video-Daten vorzunehmen. Dies ist möglich, obwohl auf dem Datenspeichermedium die Zuordnung zwischen den Video- und Audio-Daten an sich unverändert bleibt. Lediglich beim Erstellen der Schnittliste und beim Wiedergeben anhand dieser Liste wird eine entsprechende Korrektur vorgenommen.

Für andere Editier- und Wiedergabevorgänge bleiben die Daten unverändert, so daß für gegebenenfalls andere, zu erstellende Schnittlisten, andere Verzögerungswerte einstellbar sind.

Gemäß einer weiteren Ausgestaltung der Erfindung ist für diese Wiedergabeanordnung vorgesehen, daß diese das Auslesen der Video-Daten von dem Datenspeichermedium für jeden Editierabschnitt anhand der in der Schnittliste angegebenen Timecode-Werte vornimmt und daß die Wiedergabeanordnung das Auslesen der Audio-Daten von dem Datenspeichermedium in der Weise vornimmt, daß für jeden Edierabschnitt die den ausgelesenen Video-Daten zugeordneten Audio-Daten um diejenige Zahl von Abtastwerten versetzt erfolgt, die in der Schnittliste (3) für diesen Editierabschnitt angegeben ist.

Ist in der Editierliste für jeden Editierabschnitt eine eigene Zahl von Audio-Daten angegeben, um die diese versetzt zu den an sich zugeordneten Video-Daten wiedergegeben werden sollen, so wertet die Wiedergabeanordnung diese Zahl getrennt für jeden Editierabschnitt aus und steuert beim Wiedergeben der Daten die Audio-Daten entsprechend zeitlich versetzt an. Damit ist der gewünschte Zeitversatz für jeden Editierabschnitt individuell einstellbar und realisierbar.

Durch den für jeden Editierabschnitt getrennt einstellbaren Zeitversatz der Audio-Daten kann sich an den Übergängen zwischen den Editierabschnitten gegebenenfalls eine Lücke bzw. Störung ergeben. Zur Beseitigung dieser ist gemäß einer weiteren Ausgestaltung der Erfindung vorgesehen, daß das Tonsignal in den Übergängen zwischen Editierabschnitten unterdrückt wird.

Nachfolgend wird ein Ausführungsbeispiel der Erfindung anhand der Zeichnung näher erläutert. Es zeigen:
Fig. 1 eine schematische Darstellung des Zusammenspiels eines Datenspeichermediums mit der erfindungsgemäßen Editieranordnung und der erfindungsgemäßen Wiedergabeanordnung,
Fig. 2 eine schematische Darstellung eines Teils einer Schnittliste mit verschiedenen Editierabschnitten, bei der die Audio-Daten relativ zu den Video-Daten um einen gewünschten Zeitversatz verzögert sind,
Fig. 3 eine Darstellung gemäß Fig. 2 mit für jeden Editierabschnitt getrennt einstellbaren Zeitversatz.

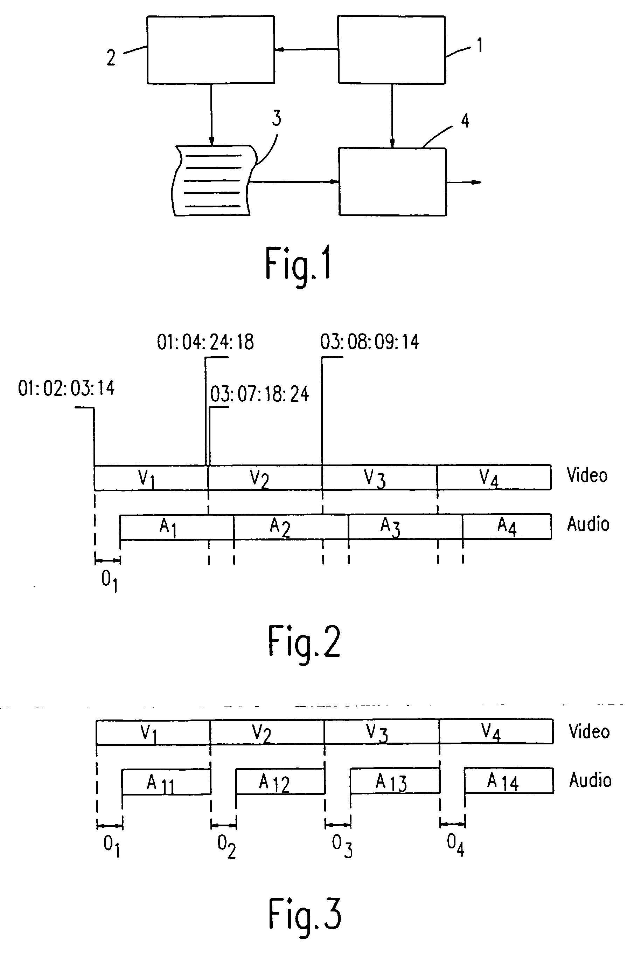

Die schematische Darstellung in Fig. 1 zeigt ein Datenspeichermedium 1. Bei diesem Datenspeichermedium handelt es sich um ein solches, welches einen wahlfreien Zugriff auf die auf ihm abgespeicherten Video- und diesen zugeordneten Audio-Daten gestattet. Es sind ferner Timecode-Daten abgespeichert, welche den Video-Daten zugeordnet sind. Mittels der Timecode-Daten ist jedes Bild der Video-Daten einzeln gekennzeichnet. Infolge des wahlfreien Zugriffs kann auf beliebige Abschnitte der Video-Daten mit nur sehr geringer Zeitverzögerung zugegriffen werden.

In Fig. 1 ist ferner schematisch eine Editieranordnung 2 angedeutet, welche auf die Daten, die auf dem Datenspeichermedium 1 abgespeichert sind, zugreifen kann. Mittels der Editieranordnung 2 wird eine Schnittliste 3 erstellt, welche für jeden Editierabschnitt die Timecode-Daten enthält, die den für den Editierabschnitt vorgesehenen Video-Daten zugeordnet sind. Es ist dabei in der Schnittliste für jeden Editierabschnitt der Timecode des ersten Bildes der Videosequenz des Editierabschnittes und der Timecode des letzten Bildes dieser Videosequenz vermerkt.

In der Schnittliste 3 ist ferner vorzugsweise für jeden Editierabschnitt einzeln, ein Zahlenwert vermerkt, für den die Audio-Daten relativ zu den an sich zugeordneten Video-Daten verschoben wiederzugeben sind.

Die in der Fig. 1 ebenfalls schematisch angedeutete Wiedergabeanordnung 4 orientiert sich anhand der Daten der Schnittliste 3. Für jeden Editierabschnitt werden die Video-Daten entsprechend den Timecode-Werten, die in der Schnittliste 3 vermerkt sind, aus dem Speichermedium 1 ausgelesen. Die Adressierung wird dabei ahand der Timecode-Daten vorgenommen und die Video-Daten von der Wiedergabeanordnung 4 in der in der Schnittliste 3 angegebenen Reihenfolge ausgangsseitig zur Verfügung gestellt. Dadurch, daß das Speichermedium 1 wahlfreien Zugriff bietet, kann eine unmittelbare Wiedergabe erfolgen, so daß auch bei Übergängen zwischen verschiedenen Editierabschnitten keine zeitliche Verzögerung bzw. keine Lücke entsteht.

Die Wiedergabeanordnung 4 steuert die Wiedergabe der aus dem Speichermedium 1 auszulesenden Audio-Daten in der Weise, daß die den Video-Daten an sich zugeordneten Audio-Daten um so viele Abtastwerte versetzt wiedergegeben werden, wie in der Schnittliste für jeden Editierabschnitt angegeben. Damit können die Audio-Daten relativ zu den Video-Daten zeitlich versetzt wiedergegeben werden.

Fig. 2 zeigt in schematischer Darstellung einige Editierabschnitte bzw. diesen zugeordnete Video- und Audio-Daten mit zugehörigen Timecode-Daten.

In der Darstellung gemäß Fig. 2 sind vier Editierabschnitte angedeutet, wobei diesen Editierabschnitten Video-Datenblöcke V₁, V₂, V₃ und V₄ zugeordnet sind. Die Video-Daten werden anhand von Timecode-Werten identifiziert, wobei beispielsweise die Video-Daten V₁ des ersten Editierabschnittes durch Timecode-Werte von 01:02:03:14 bis 01:04:24:18 gekennzeichnet sind. Zu dem Editierabschnitt gehören also die Video-Daten, die auf dem Speichermedium 1 entsprechend Fig. 1 abgespeichert sind und welchem Timecode-Werte zwischen diesen beiden Timecode-Werten zugeordnet sind. In entsprechender Weise sind auch für die weiteren Editierabschnitte V₂ bis V₄ jeweils Anfangs- und End-Timecodewerte in der Schnittliste 3 der Darstellung gemäß Fig. 1 vermerkt.

Bei bekannten Editier- und Wiedergabeanordnungen würden die zugeordneten Audio-Datenblöcke, die in der Fig. 2 mit A₁ bis A₄ gekennzeichnet sind, in der vorliegenden festen Zuordnung relativ zu den Video-Daten wiedergegeben.

Erfindungsgemäß besteht jedoch die Möglichkeit, einen zeitlichen Versatz der Audio-Daten zu den Video-Daten vorzusehen. In der Fig. 2 ist dies durch den zeitlichen Versatz O₁ gekennzeichnet. In dem Beispielsfalls gemäß Fig. 2 werden also die Audio-Daten zeitlich verzögert um diesen Versatz relativ zu den ihnen an sich zugeordneten Video-Daten wiedergegeben. Ein solcher Versatz könnte auch in der Weise erfolgen, daß die Audio-Daten entsprechend eher als die Video-Daten wiedergegeben werden.

In dem in Fig. 2 dargestellten Beispiel ist dieser zeitliche Versatz O₁ für alle Editierabschnitte identisch. Der zeitliche Versatz wird dadurch erzeugt, daß entsprechend der in der Schnittliste angegebenen Anzahl von Audio-Abtastwerten die Audio-Daten versetzt relativ zu den Video-Daten aus dem Datenspeichermedium 1 gemäß Fig. 1 ausgelesen werden. Da dieses Datenspeichermedium wahlfreien Zugriff bietet, kann im Prinzip ein beliebiger Versatz eingestellt werden.

Die Darstellung gemäß Fig. 3 zeigt eine Darstellung einer Editierliste mit verschiedenen Editierabschnitten entsprechend Fig. 2. Im Unterschied zu der Darstellung gemäß Fig. 2 ist in dem Beispiel gemäß Fig. 3 für jeden Editierabschnitt ein individueller Zeitversatz O₁, O₂, O₃ und O₄ einstellbar. Dies kann dann zweckmäßig sein, wenn eine gegebenenfalls vorhandene Asynchronität zwischen den Audio- und Video-Daten, so wie sie auf dem Datenspeichermedium 1 gemäß Fig. 1 abgespeichert sind, schwankt oder von Aufnahmeabschnitt zu Aufnahmeabschnitt unterschiedlich ist. Entsprechend der Darstellung gemäß Fig. 3 kann der Zeitversatz dann für jeden Editierabschnitt einzeln gewählt werden.

## Patentansprüche

1. Editieranordnung (2) zum nicht linearen Editieren von auf einem Datenspeichermedium (1) abgespeicherten Video- und diesen zugeordneten Audio-Daten, wobei die Video-Daten mittels zugeordneten Timecode-Daten markiert sind, und wobei die Editieranordnung (2) beim Editieren eine Schnittliste (3) erstellt, welche für jeden Editierabschnitt wenigstens die zugeordneten Anfangs- und End-Timecode-Daten der Video-Daten des Editierabschnittes enthält, **dadurch gekennzeichnet,**
**daß** die Editieranordnung (2) das Editieren der Video-Daten anhand der zugeordneten Timecode-Daten vornimmt, daß beim Editieren der Video-Daten an der Editieranordnung (2) ein Zeitversatz der den editierten Video-Daten zugeordneten Audio-Daten relativ zu den Video-Daten einstellbar ist, daß in der Editieranordnung (2) Mittel vorgesehen sind, welche in Abhängigkeit des eingestellten Zeitversatzes diejenige Zahl von Abtastwerten der Audio-Daten berechnen, um die diese relativ zu den Video-Daten verschoben wiederzugeben sind, so daß der gewünschte Zeitversatz wiedergabeseitig eintritt, und daß die Editieranordnung (2) diese Zahl in der Schnittliste (3) vermerkt.

2. Editieranordnung nach Anspruch 1, **dadurch gekennzeichnet,**
**daß** der Zeitversatz für jeden Editierabschnitt individuell einstellbar ist und daß die Editieranordnung (2)für jeden Editierabschnitt diejenige Zahl von Abtastwerten der Audio-Daten individuell berechnet, um die diese relativ zu den Video-Daten verschoben wiederzugeben sind, so daß der gewünschte Zeitversatz in dem jeweiligen Editierabschnitt wiedergabeseitig eintritt, und daß die Editieranordnung (2) diese Zahl individuell für jeden Editierabschnitt in der Schnittliste (3) vermerkt.

3. Wiedergabeanordnung zum Wiedergeben der Video- und Audio-Daten nach einer von der Editieranordnung nach Anspruch 1 erstellten Schnittliste, **dadurch gekennzeichnet,**
**daß** die Wiedergabeanordnung (4) das Auslesen der Video-Daten von dem Datenspeichermedium (1) für jeden Editierabschnitt anhand der in der Schnittliste (3) angegebenen Timecode-Werte vornimmt und daß die Wiedergabeanordnung (4) das Auslesen der Audio-Daten von dem Datenspeichermedium (1) in der Weise vornimmt, daß die den ausgelesenen Video-Daten zugeordneten Audio-Daten um diejenige Zahl von Abtastwerten versetzt erfolgt, die in der Schnittliste (3) angegeben ist.

4. Wiedergabeanordnung zum Wiedergeben der Video- und Audio-Daten nach einer von der Editieranordnung nach Anspruch 2 erstellten Schnittliste, **dadurch gekennzeichnet,**
**daß** die Wiedergabeanordnung (4) das Auslesen der Video-Daten von dem Datenspeichermedium (1) für jeden Editierabschnitt anhand der in der Schnittliste (3) angegebenen Timecode-Werte vornimmt und daß die Wiedergabeanordnung (4) das Auslesen der Audio-Daten von dem Datenspeichermedium (1) in der Weise vornimmt, daß für jeden Editierabschnitt die den ausgelesenen Video-Daten zugeordneten Audio-Daten um diejeinge Zahl von Abtastwerten versetzt erfolgt, die in der Schnittliste (3) für diesen Editierabschnitt angegeben ist.

5. Wiedergabeanordnung nach Anspruch 4, **dadurch gekennzeichnet,**
**daß** das Tonsignal in den Übergängen zwischen Editierabschnitten unterdrückt wird.

## Claims

1. An editing device (2) for non-linearly editing video data and audio data assigned to said video data, stored on a data storage medium (1), in which the video data are marked by means of assigned timecode data, and in which, during editing, the editing device (2) creates an editing list (3) which comprises, for each editing section, at least the assigned start and end timecode data of the video data of the editing section, **characterized in that** the editing device (2) edits the video data with reference to the assigned timecode data, **in that**, during editing of the video data, the editing device (2) allows the audio data assigned to the edited video data to be adjusted with a time delay relative to the video data, **in that** the editing device (2) comprises means which, dependent on the adjusted time delay, compute that number of sampling values of the audio data by which these audio data are reproduced with a delay relative to the video data so that the desired time delay sets in at the reproduction end, and **in that** the editing device (2) notes said number in the editing list (3).

2. An editing device as claimed in Claim 1, **characterized in that** the time delay for each editing section is individually adjustable, and **in that**, for each editing section, the editing device (2) individually computes that number of sampling values of audio data by which number these audio data are to be reproduced with a delay relative to the video data in the respective editing section, so that the desired time delay sets in at the reproduction end, and **in that** the editing device (2) notes said number individually for each editing section in the editing list (3).

3. A reproduction device for reproducing video and audio data in accordance with an editing list created by the editing device as claimed in Claim 1, **characterized in that** the reproduction device (4) reads the video data from the data storage medium (1) for each editing section with reference to the timecode values indicated in the editing list (3), and **in that** the reproduction device (4) reads the audio data from the data storage medium (1) in such a way that the audio data assigned to the read video data are delayed by that number of sampling values which is indicated in the editing list (3).

4. A reproduction device for reproducing video and audio data in accordance with an editing list created by the editing device as claimed in Claim 2, **characterized in that** the reproduction device (4) reads the video data from the data storage medium (1) for each editing section with reference to the timecode values indicated in the editing list (3), and **in that** the reproduction device (4) reads the audio data from the data storage medium (1) in such a way that, for each editing section, the audio data assigned to the read video data are delayed by that number of sampling values which is indicated in the editing list (3) for said editing section.

5. A reproduction device as claimed in Claim 4, **characterized in that** the sound signal is suppressed at the interfaces between editing sections.

## Revendications

1. Dispositif d'édition (2) pour l'édition non linéaire de données vidéo et de données audio associées à celles-ci, stockées sur un support d'enregistrement de données (1), où les données vidéo sont marquées au moyen de données de code temporel associées, et où le dispositif d'édition (2) crée une liste de montage (3) lors de l'édition, laquelle contient, pour chaque section de montage, au moins les données de code temporel de début et de fin associées des données vidéo de la section de montage,
**caractérisé en ce que**
le dispositif d'édition (2) réalise l'édition des données vidéo à l'aide des données de code temporel associées, **en ce que**, lors de l'édition des données vidéo au niveau du dispositif d'édition (2), un retard des données audio associées aux données vidéo éditées par rapport aux données vidéo peut être réglé, **en ce que** dans le dispositif d'édition (2), des moyens sont prévus, lesquels calculent le nombre de valeurs d'échantillonnage des données audio en fonction du retard réglé, afin de reproduire celles-ci de façon décalée par rapport aux données vidéo, de sorte que le retard souhaité passe côté reproduction, et que le dispositif d'édition (2) note ce nombre dans la liste de montage (3).

2. Dispositif d'édition selon la revendication 1, **caractérisé en ce que**
le retard pour chaque section de montage peut être réglé individuellement et **en ce que** le dispositif d'édition (2) calcule individuellement le nombre de valeurs d'échantillonnage des données audio pour chaque section de montage, afin de reproduire celles-ci de façon décalée par rapport aux données vidéo, de sorte que le retard souhaité dans la section de montage respective passe côté reproduction, et que le dispositif d'édition (2) note ce nombre individuellement pour chaque section de montage dans la liste de montage (3).

3. Dispositif de reproduction pour la reproduction des données vidéo et audio selon une liste de montage créée par le dispositif d'édition selon la revendication 1, **caractérisé en ce que**
le dispositif de reproduction (4) réalise la lecture des données vidéo à partir du support d'enregistrement de données (1) pour chaque section de montage à l'aide des valeurs de code temporel indiquées dans la liste de montage (3) et **en ce que** le dispositif de reproduction (4) réalise la lecture des données audio à partir du support d'enregistrement de données (1) de telle manière qu'il en résulte un déplacement des données audio associées aux données vidéo lues, du nombre de valeurs d'échantillonnage qui est indiqué dans la liste de montage (3).

4. Dispositif de reproduction pour la reproduction des données vidéo et audio selon une liste de montage créée par le dispositif d'édition selon la revendication 2, **caractérisé en ce que**
le dispositif de reproduction (4) réalise la lecture des données vidéo à partir du support d'enregistrement de données (1) pour chaque section de montage à l'aide des valeurs de code temporel indiquées dans la liste de montage (3) et **en ce que** le dispositif de reproduction (4) réalise la lecture des données audio à partir du support d'enregistrement de données (1) de telle manière que pour chaque section de montage, il en résulte un déplacement des données audio associées aux données vidéo lues, du nombre de valeurs d'échantillonnage qui est indiqué dans la liste de montage (3) pour cette section de montage.

5. Dispositif de reproduction selon la revendication 4, **caractérisé en ce que**
le signal audio est supprimé entre les sections de montage lors des transitions.
